# FASCICULE DE BREVET EUROPEEN

(11) **EP 3 634 712 B1**
(45) Date de publication et mention de la délivrance du brevet: **07.04.2021**
(21) Numéro de dépôt: 18725291.1
(22) Date de dépôt: 25.04.2018
(51) Int. Cl.: B29C 45/14

(54) **PROCEDE DE FABRICATION D'UN CONDUIT D'ADMISSION D'AIR**
VERFAHREN ZUR HERSTELLUNG EINES LUFTEINLASSKANALS
METHOD FOR MANUFACTURING AN AIR-INTAKE DUCT

(30) Priorité: 09.06.2017 FR 1755189
(43) Date de publication de la demande: 15.04.2020
(73) Titulaire: NOVARES France, 92140 Clamart (FR)
(72) Inventeur: JEAN, Thomas, 62150 Houdain (FR); BRODNIK, Julien, 62218 Loison sous Lens (FR)
(74) Mandataire: Delorme, Nicolas
(86) Numéro de dépôt international: PCT/FR2018/051048
(87) Numéro de publication internationale: WO 2018/224744

(56) Documents cités:
- EP-A1- 2 754 881
- US-A1- 2012 118 664

## Description

La présente invention concerne un procédé de fabrication d'un conduit d'admission d'air relié à un moteur à combustion interne et un conduit d'admission d'air fabriqué selon ce procédé.

Il est connu que les moteurs à combustion interne présentent une composante acoustique basse fréquence allant de 30Hz à 1kHz. Cette composante acoustique est générée par l'ouverture et la fermeture périodique des soupapes, ainsi que par les résonances des différentes cavités du moteur (chambres de combustion, conduits, ...). La composante acoustique basse fréquence se propage et rayonne à l'entrée du circuit d'alimentation en air du moteur. En se propageant à l'intérieur des conduits d'alimentation en air du moteur, la composante acoustique basse fréquence excite la résonance des conduits, ce qui génère de fortes émissions acoustiques.

En outre, dans le cas des moteurs turbocompressés, il existe une composante acoustique haute fréquence allant de 1kHz à 15kHz. Cette composante acoustique est générée par le turbocompresseur et peut aussi se propager et rayonner à travers les conduits d'alimentation en air.

Traditionnellement, on désigne par bruit de bouche la composante acoustique qui se propage dans les conduits d'alimentation en air, et on désigne par bruit rayonné la composante acoustique rayonnée par les conduits d'alimentation en air, eux-mêmes.

Actuellement, pour atténuer les bruits émanant des conduits d'admission d'air, il est connu d'utiliser un silencieux. Un silencieux présente usuellement un tube central dans lequel circule de l'air, et dont la paroi est perforée de plusieurs orifices qui mettent en communication l'intérieur du tube avec une chambre périphérique, délimitée par une cloche qui entoure le tube central. Lorsqu'il est stimulé par des ondes sonores, le faible volume d'air contenu dans chaque orifice agit sensiblement comme une petite masse, qui serait suspendue à un ressort constitué par le volume d'air plus important contenu dans la chambre périphérique. On obtient ainsi une atténuation du bruit dans une bande spectrale située au voisinage de la fréquence caractéristique de ce système « masse-ressort ».

Cependant, le silencieux ne permet pas de couvrir toute la plage de fréquence. En effet, le silencieux ne présente pas un niveau d'atténuation suffisant dans le domaine des basses fréquences.

Une autre solution consiste à utiliser un résonateur. Le résonateur comprend un tube central présentant une dérivation fermée à angle droit. Ce type de résonateur est très sélectif et ne fonctionne que sur une bande de fréquence très mince.

Pour améliorer les caractérisitiques acoustiques du conduit d'admission d'air, il est aussi connu de lui adjoindre un média poreux qui apporte une performance acoustique. A ce sujet le document FR 2788833, déposé par le demandeur propose un conduit sur une portion duquel est surmoulé un média poreux. Une autre solution connue consiste à souder deux demi-coques, produites par thermoformage, d'un média polyester poreux. On peut aussi citer le document JP 2008063970 dans lequel un tuyau poreux est réalisé avec deux demi-coques en média poreux thermocompressé. Les deux demi-coques sont assemblées par un système de clipsage rapporté. La mise en œuvre de ces différentes techniques impose l'utilisation d'un outillage onéreux, tel qu'un moule d'injection incluant un système robotisé, pour mettre en place le média poreux dans le moule. De plus, ces techniques ne permettent pas de réaliser un tuyau 100% poreux en raison des contraintes techniques de fabrication.

Une autre technologie de l'art antérieur est connue du document US 2012/118664.

Une autre technique connue du document EP 0665404 consiste à enrouler un média poreux autour d'une structure métallique. Cette technique nécessite l'utilisation d'une machine spéciale d'enroulement filamentaire, ce type de machine étant très onéreux.

En conséquence, la présente invention a pour objectif de proposer un procédé de fabrication simple et peu onéreux d'un conduit d'admission d'air qui présente une surface maximale de matériau poreux.

Selon une définition générale, l'invention concerne un procédé de fabrication d'un conduit d'admission d'air et d'atténuation des bruits de bouche et des bruits rayonnés destiné à être relié à un moteur à combustion interne. Le procédé comprend les étapes de :
- (a) : fourniture d'un moule comprenant deux empreintes de moulage, chaque empreinte présentant au moins une rainure adaptée pour mouler une nervure et présentant au moins deux demi-alésages adaptés pour mouler des manchons d'extrémité,
- (b) : fourniture d'un noyau adapté pour être positionné entre les empreintes, pour mouler un conduit d'admission d'air,
- (c) : positionnement sur le noyau d'une nappe tubulaire en matériau poreux à l'air,
- (d) : positionnement entre les empreintes de moulage du noyau avec la nappe tubulaire,
- (e) : injection dans la, ou chaque, rainure et dans chaque demi-alésage, de chaque empreinte d'un matériau thermoplastique, pour surmouler des nervures et des manchons d'extrémité sur la nappe tubulaire, afin de former un conduit.

D'une manière particulièrement avantageuse, le procédé selon l'invention permet de fabriquer, en une seule phase d'injection, un conduit d'admission d'air présentant une surface maximale de matériau poreux. En d'autres termes, le procédé selon l'invention permet de fabriquer un conduit d'admission d'air présentant une surface maximale de matériau poreux, avec un nombre réduit d'étapes de fabrication. Ainsi, l'invention propose un procédé de fabrication simple et peu onéreux d'un conduit d'admission d'air qui présente une surface maximale de matériau poreux

Selon une disposition particulière, le procédé peut comprendre une étape (f) de déchaussement en force du conduit moulé, par de l'air pulsé.

Selon un premier mode de réalisation, l'étape (a) peut comprendre la fourniture de deux empreintes de moulage dans lesquelles les rainures sont adaptées pour mouler une nervure hélicoïdale.

Selon un deuxième mode de réalisation, l'étape (a) comprend la fourniture de deux empreintes de moulage dans lesquelles les rainures sont adaptées pour mouler plusieurs nervures formant une grille.

Selon une disposition particulière, l'étape (e) peut comprendre l'injection d'un matériau élastomère thermoplastique.

L'invention concerne aussi un conduit d'admission d'air et d'atténuation des bruits de bouche et des bruits rayonnés destiné à être relié à un moteur à combustion interne. Le conduit comprend une nappe tubulaire en matériau poreux à l'air sur laquelle sont surmoulés au moins une nervure en matériau élastomère thermoplastique et deux manchons d'extrémités en matériau thermoplastique, un premier manchon étant destiné à être connecté à un moteur à combustion interne et un deuxième manchon étant destiné à être connecté à un circuit d'admission d'air.

Ainsi, le conduit selon l'invention présente une surface maximale de média poreux, permettant d'atténuer les bruits de bouche et les bruits rayonnés. De plus, la structure du conduit d'admission d'air selon l'invention le rend léger, permettant ainsi un gain de poids lorsque le conduit est installé dans un véhicule. En outre, les nervures surmoulées permettent d'assurer la résistance du conduit aux efforts de dépression provoqués par l'aspiration d'air dans le conduit lorsque celui-ci est connecté à un moteur à explosion et à un circuit d'admission d'air.

Selon un premier mode de réalisation, le conduit peut comprendre une nervure hélicoïdale.

La nervure hélicoïdale peut permettre au conduit d'être flexible.

Selon un deuxième mode de réalisation, le conduit peut comprendre plusieurs nervures formant une grille.

Selon une disposition particulière, la nappe tubulaire peut présenter une porosité comprise entre 200 l/m²/s et 600 l/m²/s sous une perte de charge de 200 Pascals.

Selon une disposition particulière, le matériau thermoplastique peut être un matériau élastomère thermoplastique.

D'autres caractéristiques et avantages de la présente invention ressortiront clairement de la description détaillée ci-après de deux modes de réalisation de l'invention donnés à titre d'exemples non limitatifs, en référence aux dessins annexés dans lesquels :
- La figure 1 représente un moule en position ouverte et un noyau, selon l'invention,
- La figure 2 représente le positionnement sur le noyau d'une nappe tubulaire selon l'invention,
- La figure 3 représente la fermeture du moule, selon l'invention,
- La figure 4 est une vue en transparence d'un moule fermé, avant l'injection d'un matériau élastomère thermoplastique,
- La figure 5 est une vue en transparence d'un moule fermé, lors de l'injection d'un matériau élastomère thermoplastique,
- La figure 6 est une représentation de l'ouverture du moule après injection,
- La figure 7 est une représentation de l'éjection du conduit d'admission d'air moulé,
- La figure 8 est une représentation d'un conduit d'admission d'air selon un premier mode de réalisation de l'invention,
- La figure 9 est une représentation d'un conduit d'admission d'air selon un deuxième mode de réalisation.

L'invention concerne un procédé de fabrication d'un conduit d'admission d'air et d'atténuation des bruits de bouche et des bruits rayonnés destiné à être relié à un moteur à combustion interne.

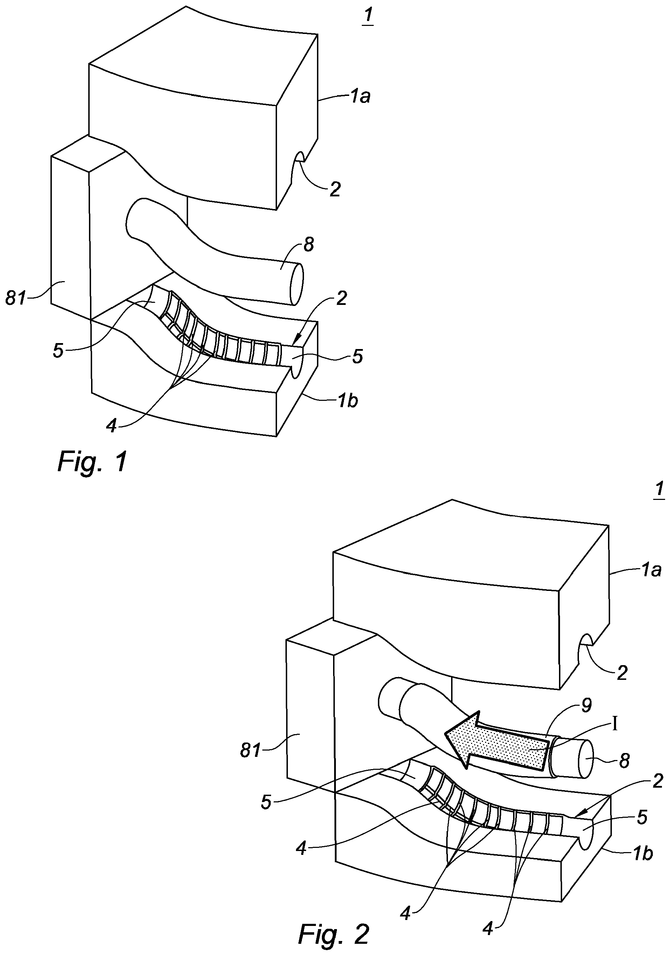

Le procédé selon l'invention peut être mis en œuvre avec un moule 1 présenté sur les figures 1 à 7. Le moule 1 est destiné à être installé dans une presse à injecter. Selon le mode de réalisation ici présenté, le moule 1 comprend une première coquille la et une deuxième coquille 1b. Les deux coquilles 1a et 1b sont configurées pour être pressées l'une contre l'autre lors de l'injection d'une matière dans le moule, et pour être écartées l'une de l'autre après l'opération d'injection. D'une manière traditionnelle, la première coquille la est mobile et la deuxième coquille 1b est fixe, par rapport à une presse à injecter. Ainsi le moule 1 est mobile entre une position ouverte dans laquelle les deux coquilles 1a et 1b sont écartées l'une de l'autre et une position fermée dans laquelle les deux coquilles 1a et 1b sont pressées l'une contre l'autre. D'une manière classique, le moule 1 peut être réalisé en métal. Chaque coquille la-lb présente une empreinte 2. Selon l'exemple ici présenté, chaque empreinte 2 présente une forme sensiblement hémicylindrique présentant une courbure longitudinale et deux extrémités. Chaque empreinte 2 présente plusieurs rainures 4 et deux demi-alésages 5. Les deux demi-alésages 5 sont positionnés aux extrémités de l'empreinte 2. En condition d'utilisation, les rainures 4 permettent de mouler une ou plusieurs nervures 32 d'un conduit 30. De même, en condition d'utilisation, les deux demi-alésages 5 permettent de mouler des manchons d'extrémité 34-36 du conduit 30.

Selon un premier mode de réalisation, les rainures 4 sont adaptées pour mouler une nervure 32 hélicoïdale.

Selon un deuxième mode de réalisation, les rainures 4 sont adaptées pour mouler plusieurs nervures 32 formant une grille.

En outre, selon un mode de réalisation non représenté, chaque empreinte 2 peut aussi présenter des éléments permettant de mouler, par exemple, des systèmes de fixation tels que des pattes de support, et des systèmes d'accroche d'autres éléments tels que des câbles ou d'autres conduits.

Le procédé selon l'invention utilise aussi un noyau 8 adapté pour coopérer avec le moule 1. D'une manière connue, dans le domaine du moulage par injection, un noyau permet de former une partie creuse d'une pièce ou de réserver une ouverture. Dans le procédé selon l'invention, le noyau 8 permet de réserver la section creuse du conduit 30. Le noyau 8 peut être réalisé en métal. Le noyau 8 est adapté pour être positionné entre les empreintes 2. Selon l'exemple ici présenté, le noyau 8 présente une forme sensiblement cylindrique avec une courbure longitudinale. Selon le mode de réalisation ici présenté, le noyau 8 est fixé à une embase 81 adaptée pour être appuyée contre les deux coquilles 1a et 1b du moule 1 en position fermée.

Le moule 1 et le noyau 8 permettent de mettre en œuvre le procédé de fabrication d'un conduit d'admission d'air 30 selon l'invention. Outre une étape a de fourniture du moule 1 et une étape b de fourniture du noyau 8, le procédé comprend une étape c de positionnement sur le noyau 8 d'une nappe tubulaire 9. Il est précisé que par nappe tubulaire 9 on entend, une nappe présentant deux bordures jointes pour former sensiblement un cylindre à base circulaire. Les deux bordures jointes de la nappe peuvent être soudées, collées ou cousues. En référence à la figure 2 la nappe tubulaire 9 est emmanchée sur le noyau 8 selon la direction de la flèche I. La nappe tubulaire 9 peut, par exemple, être réalisée en matériau tissé ou non tissé pouvant comprendre plusieurs composants. La nappe tubulaire 9 peut présenter une porosité comprise entre 200 l/m²/s et 600 l/m²/s sous une perte de charge de 200 Pascals.

Selon une disposition particulière, la nappe tubulaire 9 peut être réalisée à partir d'un matériau non-tissé, produit par aiguilletage, comprenant des fibres de polyester et des fibres bi-composantes. Les fibres bi-composantes peuvent comprendre une âme en polyester et une peau en copolyester.

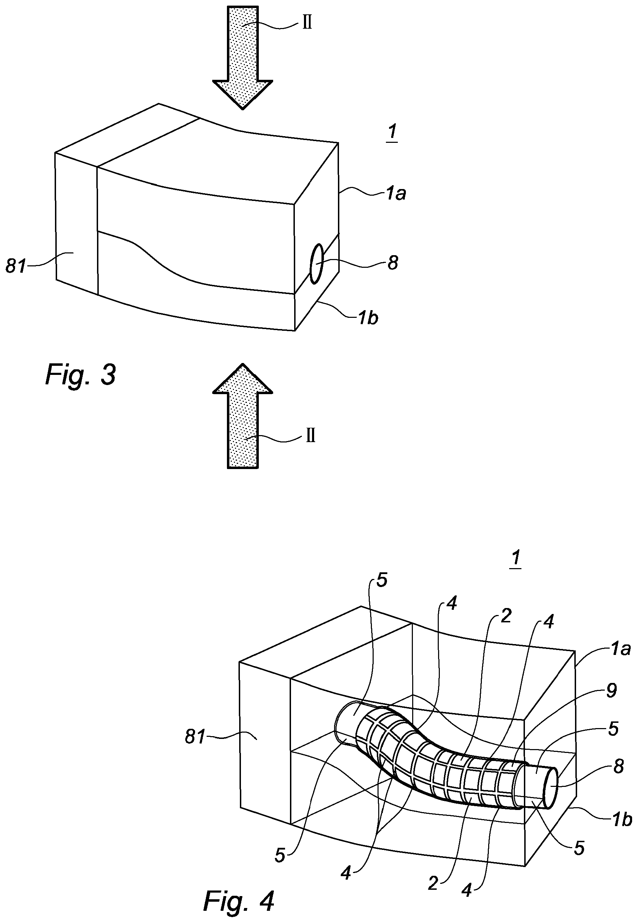

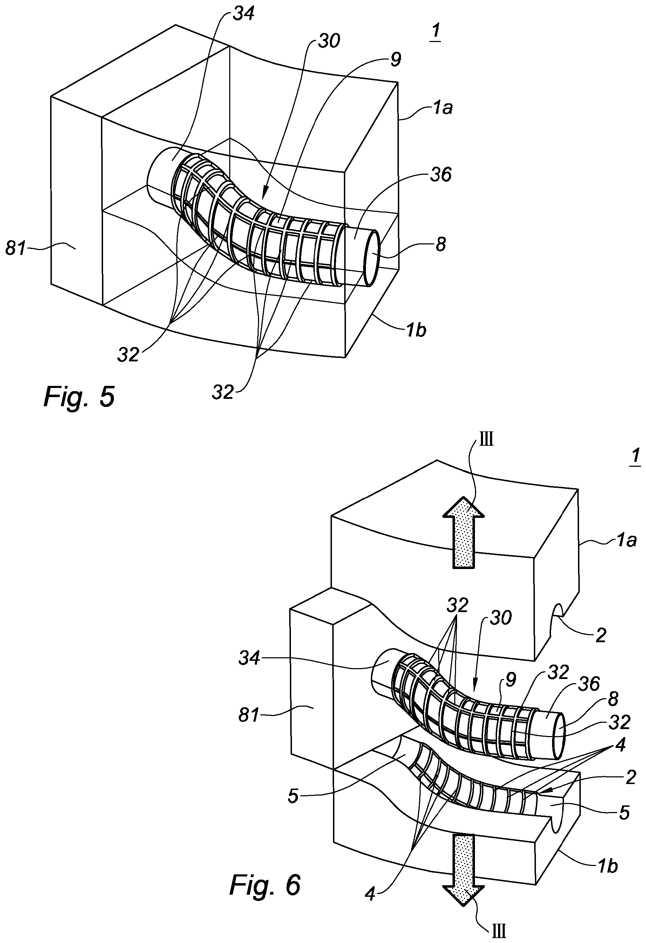

Ensuite, le procédé comprend une étape d de positionnement du noyau 8 entre les empreintes 2 du moule 1 en position ouverte. Puis, comme représenté sur la figure 3, le moule 1 est fermé selon les directions des flèches II. Lors du passage en position fermée, l'appui de l'embase 81 contre les coquilles 1a et 1b peut servir de référence pour garantir le positionnement correct du noyau 8 entre les empreintes 2. En référence à la figure 5, le procédé présente ensuite une étape e d'injection dans chaque rainure 4 et dans chaque demi-alésage 5, de chaque empreinte 2 d'un matériau élastomère thermoplastique, pour surmouler des nervures 32 et des manchons d'extrémité 34 sur la nappe tubulaire 9. Cette étape permet de mouler le conduit 30 en une seule injection. D'une manière particulièrement avantageuse, lors de l'injection dans les rainures 4, le matériau élastomère thermoplastique pénètre localement dans la nappe tubulaire 9, ce qui permet d'assurer la cohésion de la nappe tubulaire 9 avec la, ou chaque nervure 32 surmoulée sur la nappe tubulaire 9. Selon une disposition particulière, le matériau élastomère thermoplastique peut être du type éthylène-propylène-diène monomère mélangé avec du polypropylène. Le surmoulage des nervures 32 sur la nappe tubulaire 9 permet de fabriquer un conduit 30 présentant une surface maximale en nappe tubulaire poreuse, tout en présentant une résistance optimale à la dépression.

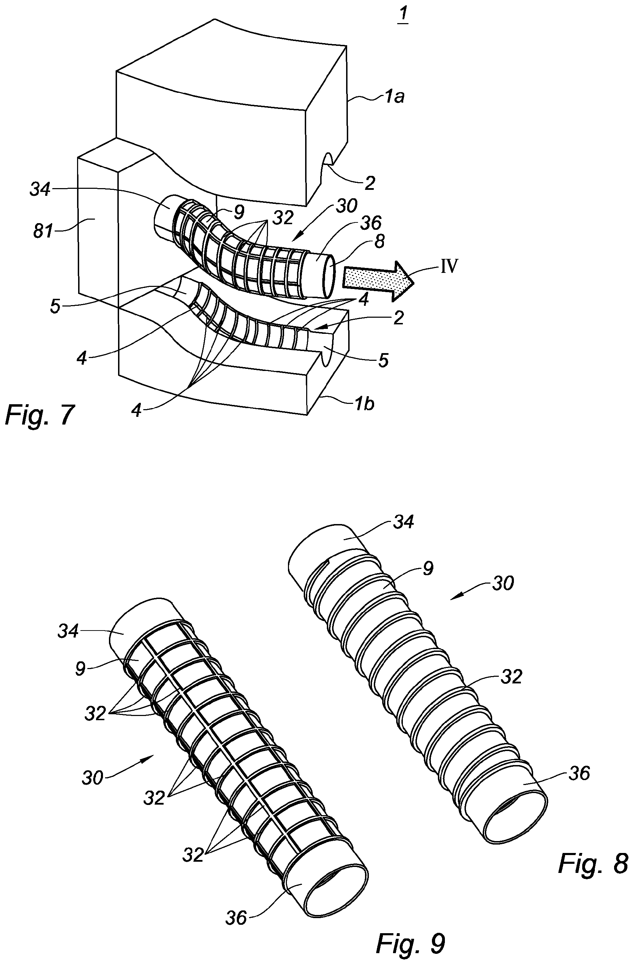

En référence à la figure 6, le moule 1 est ensuite ouvert selon les directions des flèches III, pour permettre la récupération du conduit 30. Selon une disposition particulière, le procédé peut comprendre une étape f de déchaussement en force du conduit 30 moulé, par de l'air pulsé (figure 7), selon la direction de la flèche IV.

Ainsi, le procédé selon l'invention permet de fabriquer le conduit 30 en une seule opération d'injection. Le surmoulage des nervures 32 et des manchons d'extrémité 34 sur la nappe tubulaire 9 permet d'assurer la cohésion du conduit 30. En d'autres termes, le procédé selon l'invention permet de fabriquer le conduit 30 en une seule opération d'injection sans qu'il soit nécessaire d'ajouter des opérations de collage, de clippage ou de reprise des différents constituants du conduit 30.

L'invention concerne aussi un conduit 30 d'admission d'air et d'atténuation des bruits de bouche et des bruits rayonnés destiné à être relié à un moteur à combustion interne. Le conduit 30 comprend une nappe tubulaire 9 en matériau poreux à l'air sur laquelle sont surmoulées une ou plusieurs nervures 32 en matériau élastomère thermoplastique et deux manchons d'extrémités 34-36 en matériau élastomère thermoplastique.

La nappe tubulaire 9 peut présenter une porosité comprise entre 200 l/m²/s et 600 l/m²/s. Une telle porosité permet une atténuation optimale des bruits de bouche et des bruits rayonnés.

Selon un premier mode de réalisation, représenté sur la figure 8, le conduit 30 comprend une nervure 32 hélicoïdale. La nervure 32 hélicoïdale peut permettre au conduit 30 d'être flexible.

Selon un deuxième mode de réalisation, représenté sur la figure 9, le conduit 30 comprend plusieurs nervures 32 formant une grille.

En condition d'utilisation, un premier manchon 34 est connecté à un moteur à combustion interne et un deuxième manchon 36 est connecté à un circuit d'admission d'air. De plus, la ou les nervures 32 permettent de garantir la résistance du conduit 30 à la dépression provoquée par l'aspiration d'air. La nappe tubulaire 9, en matériau poreux, permet de faire une rupture impédance acoustique ou une adaptation, ce qui permet d'éviter l'excitation de certains modes de conduit. Ainsi la nappe tubulaire 9 permet de réduire les bruits de bouche. De plus, de part la porosité du matériau de la nappe tubulaire 9, la nappe tubulaire permet 9 permet de diffuser une partie de l'énergie acoustique. La présence d'un matériau poreux sur quasiment toute la périphérie du conduit 30 permet de répartir l'énergie rayonnée d'une manière optimale, et ainsi de réduire les bruits rayonnés.

Bien entendu, l'invention n'est nullement limitée aux modes de réalisation décrits ci-dessus et illustrés par les différentes figures, ces modes de réalisation n'ayant été donnés qu'à titre d'exemples. Des modifications restent possibles, notamment du point de vue de la constitution des divers éléments ou par la substitution d'équivalents techniques, sans pour autant sortir du domaine de l'invention.

## Revendications

1. Procédé de fabrication d'un conduit (30) d'admission d'air et d'atténuation des bruits de bouche et des bruits rayonnés destiné à être relié à un moteur à combustion interne, **caractérisé en ce qu'**il comprend les étapes de :
- (a) : fourniture d'un moule (1) comprenant deux empreintes (2) de moulage, chaque empreinte (2) présentant au moins une rainure (4) adaptée pour mouler une nervure (32) et présentant au moins deux demi-alésages (5) adaptés pour mouler des manchons (34-36) d'extrémité,
- (b) : fourniture d'un noyau (8) adapté pour être positionné entre les empreintes (2), pour mouler un conduit (30) d'admission d'air,
- (c) : positionnement sur le noyau (8) d'une nappe tubulaire (9) en matériau poreux à l'air,
- (d) : positionnement entre les empreintes (2) de moulage du noyau (8) avec la nappe tubulaire (9),
- (e) : injection dans la, ou chaque, rainure (4) et dans chaque demi-alésage (5), de chaque empreinte (2) d'un matériau thermoplastique, pour surmouler des nervures (32) et des manchons (34-36) d'extrémité sur la nappe tubulaire (9), afin de former un conduit (30).

2. Procédé selon la revendication 1, **caractérisé en ce qu'**il comprend une étape (f) de déchaussement en force du conduit (30) moulé, par de l'air pulsé.

3. Procédé selon l'une des revendications 1 ou 2, **caractérisé en ce que** l'étape (a) comprend la fourniture de deux empreintes (2) de moulage dans lesquelles les rainures (4) sont adaptées pour mouler une nervure hélicoïdale (32).

4. Procédé selon l'une des revendications 1 ou 2, **caractérisé en ce que** l'étape (a) comprend la fourniture de deux empreintes (2) de moulage dans lesquelles les rainures (4) sont adaptées pour mouler plusieurs nervures (32) formant une grille.

5. Procédé selon l'une quelconque des revendications 1 à 4, **caractérisé en ce que** l'étape (e) comprend l'injection d'un matériau élastomère thermoplastique.

6. Conduit (30) d'admission d'air et d'atténuation des bruits de bouche et des bruits rayonnés destiné à être relié à un moteur à combustion interne **caractérisé en ce qu'**il comprend une nappe tubulaire (9) en matériau poreux à l'air sur laquelle sont surmoulés au moins une nervure (32) en matériau thermoplastique et deux manchons (34-36) d'extrémités en matériau élastomère thermoplastique, un premier manchon (34) étant destiné à être connecté à un moteur à combustion interne et un deuxième manchon (36) étant destiné à être connecté à un circuit d'admission d'air.

7. Conduit (30) selon la revendication 6, **caractérisé en ce qu'**il comprend une nervure hélicoïdale (32).

8. Conduit (30) selon la revendication 6, **caractérisé en ce qu'**il comprend plusieurs nervures (32) formant une grille.

9. Conduit (30) selon l'une quelconque des revendications 6 à 8, **caractérisé en ce que** la nappe tubulaire (9) présente une porosité comprise entre 200 l/m²/s et 600 l/m²/s sous une perte de charge de 200 Pascals.

10. Conduit (30) selon l'une quelconque des revendications 6 à 9, **caractérisé en ce que** le matériau thermoplastique est un matériau élastomère thermoplastique.

## Patentansprüche

1. Verfahren zur Herstellung eines Kanals (30) für den Lufteinlass und die Unterdrückung von Mündungsgeräuschen und Abstrahlgeräuschen, der dazu bestimmt ist, mit einem Verbrennungsmotor verbunden zu werden, **dadurch gekennzeichnet, dass** es folgende Schritte umfasst:
- (a): Bereitstellen einer Form (1), die zwei Formhohlräume (2) umfasst, wobei jeder Hohlraum (2) mindestens eine Rille (4) aufweist, die angepasst ist, um eine Rippe (32) zu formen, und mindestens zwei Bohrungshälften (5) aufweist, die angepasst sind, um Endstutzen (34-36) zu formen,
- (b): Bereitstellen eines Kerns (8), der angepasst ist, um zwischen den Hohlräumen (2) positioniert zu werden, um einen Lufteinlasskanal (30) zu formen,
- (c): Positionieren eines rohrförmigen Mantels (9) aus für Luft porösem Material auf dem Kern (8),
- (d): Positionieren des Kerns (8) mit dem rohrförmigen Mantel (9) zwischen den Formhohlräumen (2),
- (e): Einspritzen eines thermoplastischen Materials in die oder jede Rille (4) und in jede Bohrungshälfte (5) jedes Hohlraums (2), um Rippen (32) und Endstutzen (34-36) auf dem rohrförmigen Mantel (9) zu umformen, sodass ein Kanal (30) gebildet wird.

2. Verfahren nach Anspruch 1, **dadurch gekennzeichnet, dass** es einen Schritt (f) des Zwangsfreilegens des geformten Kanals (30) durch Zuluft umfasst.

3. Verfahren nach einem der Ansprüche 1 oder 2, **dadurch gekennzeichnet, dass** der Schritt (a) das Bereitstellen von zwei Formhohlräumen (2) umfasst, in denen die Rillen (4) angepasst sind, um eine schneckenförmige Rippe (32) zu formen.

4. Verfahren nach einem der Ansprüche 1 oder 2, **dadurch gekennzeichnet, dass** der Schritt (a) das Bereitstellen von zwei Formhohlräumen (2) umfasst, in denen die Rillen (4) angepasst sind, um mehrere Rippen (32) zu formen, die ein Gitter bilden.

5. Verfahren nach einem der Ansprüche 1 bis 4, **dadurch gekennzeichnet, dass** der Schritt (e) das Einspritzen eines thermoplastischen Elastomermaterials umfasst.

6. Kanal (30) für den Lufteinlass und die Unterdrückung von Mündungsgeräuschen und Abstrahlgeräuschen, der dazu bestimmt ist, mit einem Verbrennungsmotor verbunden zu werden, **dadurch gekennzeichnet, dass** er einen rohrförmigen Mantel (9) aus für Luft porösem Material umfasst, auf dem mindestens eine Rippe (32) aus thermoplastischem Material und zwei Endstutzen (34-36) aus thermoplastischem Elastomermaterial umformt sind, wobei ein erster Stutzen (34) dazu bestimmt ist, an einen Verbrennungsmotor angeschlossen zu werden, und ein zweiter Stutzen (36) dazu bestimmt ist, an einen Lufteinlasskreislauf angeschlossen zu werden.

7. Kanal (30) nach Anspruch 6, **dadurch gekennzeichnet, dass** er eine schneckenförmige Rippe (32) umfasst.

8. Kanal (30) nach Anspruch 6, **dadurch gekennzeichnet, dass** er mehrere Rippen (32) umfasst, die ein Gitter bilden.

9. Kanal (30) nach einem der Ansprüche 6 bis 8, **dadurch gekennzeichnet, dass** der rohrförmige Mantel (9) eine Porosität aufweist, die zwischen 200 l/m²/s und 600 l/m²/s bei einem Druckverlust von 200 Pascal beträgt.

10. Kanal (30) nach einem der Ansprüche 6 bis 9, **dadurch gekennzeichnet, dass** das thermoplastische Material ein thermoplastisches Elastomermaterial ist.

## Claims

1. A method for manufacturing a duct (30) for air intake and for attenuating mouth noises and radiated noises intended to be connected to an internal combustion engine, **characterized in that** it comprises the steps of:
- (a): providing a mold (1) comprising two molding cavities (2), each cavity (2) having at least one groove (4) adapted to mold a rib (32) and having at least two half-bores (5) adapted to mold end sleeves (34-36),
- (b): providing a core (8) adapted to be positioned between the cavities (2), for molding an air intake duct (30),
- (c): positioning on the core (8) a tubular sheet (9) made of an air-porous material,
- (d): positioning between the molding cavities (2) the core (8) with the tubular sheet (9),
- (e): injecting into the, or each, groove (4) and into each half-bore (5) of each cavity a thermoplastic material, for overmolding ribs (32) and end sleeves (34-36) on the tubular sheet (9), in order to form a duct (30).

2. The manufacturing method according to claim 1, **characterized in that** it comprises a step (f) of forcibly removing the molded duct (30) by pulsed air.

3. The manufacturing method according to any of claims 1 or 2, **characterized in that** step (a) comprises the provision of two molding cavities (2) in which the grooves (4) are adapted to mold a helical rib (32).

4. The manufacturing method according to any of claims 1 or 2, **characterized in that** step (a) comprises the provision of two molding cavities (2) in which the grooves (4) are adapted to mold several ribs (32) forming a grid.

5. The manufacturing method according to any one of claims 1 to 4, **characterized in that** step (e) comprises the injection of a thermoplastic elastomer material.

6. A duct (30) for air intake and for attenuating mouth noises and radiated noises intended to be connected to an internal combustion engine, **characterized in that** it comprises a tubular sheet (9) made of an air-porous material on which are overmolded at least one rib (32) made of a thermoplastic material and two end sleeves (34-36) made of a thermoplastic elastomer material, a first sleeve (34) being intended to be connected to an internal combustion engine and a second sleeve (36) being intended to be connected to an air intake circuit.

7. The duct (30) according to claim 6, **characterized in that** it comprises a helical rib (32).

8. The duct (30) according to claim 6, **characterized in that** it comprises several ribs (32) forming a grid.

9. The duct (30) according to any one of claims 6 to 8, **characterized in that** the tubular sheet (9) has a porosity comprised between 200 l/m²/s and 600 l/m²/s under a pressure drop of 200 Pascals.

10. The duct (30) according to any one of claims 6 to 9, **characterized in that** the thermoplastic material is a thermoplastic elastomer material.
